# EUROPÄISCHE PATENTSCHRIFT

(11) **EP 1 397 951 B1**
(45) Veröffentlichungstag und Bekanntmachung des Hinweises auf die Patenterteilung: **02.08.2006**
(21) Anmeldenummer: 03102569.5
(22) Anmeldetag: 18.08.2003
(51) Int. Cl.: A01D 45/02, A01D 63/02

(54) **Erntegerät zur Ernte stängelartiger Pflanzen**
Standing crops harvester
Machine de récolte de plantes à tiges

(30) Priorität: 14.09.2002 DE 10242796
(43) Veröffentlichungstag der Anmeldung: 17.03.2004
(73) Patentinhaber: Maschinenfabrik Kemper GmbH & Co. KG, 48973 Stadtlohn (DE)
(72) Erfinder: Resing, Alfons, 48703, Stadtlohn (DE); Wuebbels, Richard, 46414, Rhede (DE)
(74) Vertreter: Holst, Sönke

(56) Entgegenhaltungen:
- EP-A- 1 106 049
- DE-B- 1 019 855
- DE-C- 675 639
- DE-C- 679 096
- FR-A- 2 037 437
- US-A- 3 812 661
- US-A1- 2002 020 162

## Beschreibung

Die Erfindung betrifft ein Erntegerät zur Ernte stängelartiger Pflanzen, mit mindestens einer Einzugseinrichtung zur Aufnahme von auf einem Feld stehenden Pflanzen und wenigstens einem in einer Vorwärtsrichtung vor der Einzugseinrichtung angeordneten Stängelteiler, der in seiner Erntebetriebsstellung gegenüber dem Erntegerät in der seitlichen, sich quer zur Vorwärtsrichtung erstreckenden Richtung beweglich gelagert ist.

In der EP 1 161 857 A ist ein Pflücker zur Ernte stängelartiger Pflanzen beschrieben, der ein um die Hochachse rotierendes Förderelement mit sich nach außen erstreckenden Mitnehmern umfasst. Die Mitnehmer erfassen die auf dem Feld stehenden Pflanzen und transportieren sie in seitlicher Richtung und nach hinten, so dass sie in einen Pflückspalt gelangen. Durch den Pflückspalt werden die Pflanzen mittels zweier unterhalb des Pflückspalts angeordneter Pflückwalzen im Zusammenwirken mit den Mitnehmern des Förderelements transportiert. Eine weitere Förderschnecke ist oberhalb des Pflückspalts auf der dem Förderelement gegenüberliegenden Seite des Pflückspalts angeordnet, um das Einführen der Pflanzen in den Pflückspalt zu erleichtern.

Das dort beschriebene Gerät weist eine Arbeitsbreite auf, die wesentlich größer ist als die konventioneller Pflücker, die mit Einzugsketten arbeiten. Es wurde deshalb sogar angedacht, dieses Gerät zur Ernte von Mais zu verwenden, der in so genannter Gleich- oder Engstandsaat angebaut wird. Bei Gleichstandsaat werden Pflanzen mit Reihenabständen von 30 cm angebaut. Die Pflanzen benachbarter Reihen sind zueinander gleichmäßig versetzt angeordnet, und der Abstand der Pflanzen einer Reihe beträgt 33,3 cm. Dadurch erhält man ein hexagonales Muster mit 10 Pflanzen je m² und mit gleichen Abständen zwischen allen Pflanzen, was das Wachstum der Pflanzen begünstigt. Wenn ein derartiger Bestand geerntet wird, ergibt sich ein recht geringer Reihenabstand, bei dem die Dimensionierung der den Pflückeinheiten vorgelagerten Stängelteilern kritisch wird. Werden die Stängelteiler zu schmal gewählt, können sie die Pflanzen nicht seitlich bewegen, um sie dem Förderelement zuzuführen; werden sie hingegen zu breit gewählt, können sie die Pflanzen so weit verbiegen, dass dabei Kolben heruntergeschüttelt werden. Derartige Verluste sind unerwünscht.

In der EP 0 780 050 A wird ein Erntegerät gattungsgemäßer Art für in Reihen angebaute Pflanzen beschrieben, bei dem einem Messerbalken eine Vielzahl seitlich nebeneinander angeordneter Stängelteiler vorgeordnet ist. Die Stängelteiler umfassen jeweils eine Spitze, die über ein Schwenklager mit einer horizontalen, sich quer zur Vorwärtsrichtung erstreckenden Schwenkachse am Rahmen des Erntegeräts abgestützt ist. Dadurch kann sich eine unterhalb der Spitze angebrachte Kufe unterschiedlichen Geländebedingungen anpassen, indem sie sich nach unten oder oben bewegt. Das oben erwähnte Problem können diese Stängelteiler nicht lösen.

Die DE 73 42 482 U beschreibt einen einteiligen Maispflückvorsatz, bei dem die äußeren Teilerspitzen in seitlicher Richtung zwischen einer Transport- und einer Betriebsstellung verschiebbar sind. In der EP 1 179 292 A ist ein anderer Erntevorsatz beschrieben, bei dem die äußersten Teilerspitzen in der Transportposition nach außen verschwenkt werden, um Kollisionen zwischen diesen Teilerspitzen oberhalb des Hauptrahmens zu vermeiden. Diese zwei Druckschriften beschreiben Teilerspitzen, die im Erntebetrieb starr am Erntegerät angebracht sind und nur beim Übergang von der Transport- zur Betriebsstellung und umgekehrt in seitlicher Richtung bewegt werden und das oben erläuterte Problem nicht lösen können.

Die US 3 812 661 A beschreibt ein Schneidwerk für einen Mähdrescher, dem als Fänger bezeichnete Stängelteiler vorgelagert sind. Die Stängelteiler sind um vor dem Mähbalken liegende, vertikale Achsen schwenkbar angeordnet, um liegende Pflanzen zu erfassen und anzuheben.

Das der Erfindung zu Grunde liegende Problem wird darin gesehen, ein verbessertes Erntegerät bereitzustellen, bei dem unerwünschte Erntegutverluste insbesondere beim Ernten von in relativ geringem Abstand angebauten stängelartigem Erntegut vermindert sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, das Erntegerät mit einem Stängelteiler zu versehen, der beim Erntebetrieb in der sich horizontal und quer zur Vorwärtsrichtung erstreckenden Richtung durch eine Pendellagerung beweglich am Rahmen des Erntegeräts angelenkt ist. Neben dem einfachen und stabilen Aufbau ist als vorteilhaft anzusehen, dass der Stängelteiler durch die Schwerkraft in seine Ruheposition vorgespannt wird.

Auf diese Weise kann der Stängelteiler beim Erntebetrieb den Pflanzen in seitlicher Richtung ausweichen, so dass seine Breite hinreichend groß gewählt werden kann, um eine hinreichende Führung der Pflanzenstängel zu bewirken, ohne jedoch die Pflanzen derart weit zu verbiegen, dass Verluste von Kolben oder ganzen Pflanzen auftreten. Der Stängelteiler schlängelt sich quasi durch den Pflanzenbestand hindurch. Die Pflanzenstängel werden durch den Stängelteiler schonend zur Seite gedrückt und nicht umgestoßen. Dadurch kann das Erntegerät auch in Pflanzenbeständen eingesetzt werden, die nicht in einem Abstand angebaut sind, der dem Abstand zwischen benachbarten Einzugseinrichtungen entspricht, z. B. bei Gleichstandsaat.

Der Stängelteiler wird vorzugsweise durch eine Parallelogrammführung am Rahmen des Erntegeräts angelenkt. Letztere umfasst zwei parallele Arme, die jeweils am Rahmen und (in der Regel darunter) am Stängelteiler angelenkt sind. Um den Stängelteiler in die Ruheposition vorzuspannen, können separate Elemente, wie Federn oder Gewichte mit Seilzügen und Umlenkelementen verwendet werden, falls der Stängelteiler nicht frei beweglich gelagert sein soll, was jedoch grundsätzlich auch denkbar wäre.

Der Stängelteiler kann bezüglich seiner Längsachse starr, d.h. nicht drehbar, am Erntegerät angebracht sein. Um Pflanzen, die sich zu nahe am Erdboden befinden, um durch die Einzugseinrichtung des Erntegeräts aufgenommen zu werden, anheben zu können, bietet sich an, den in der Art einer Lagermaisschnecke arbeitenden Stängelteiler um seine in Vorwärtsrichtung verlaufende Längsachse drehbar zu gestalten. Er kann ohne aktiven Antrieb frei drehbar oder mit einem aktiven Antrieb versehen sein. Dieser Antrieb wird zweckmäßigerweise vom Antrieb der Einzugseinrichtung abgeleitet, obwohl auch ein separater Antrieb denkbar wäre, beispielsweise mittels eines Elektro- oder Hydromotors.

Zum Anheben von Pflanzen bieten sich Förderelemente, wie beispielsweise wendelförmige Mitnehmer an, die auf der Oberfläche des mit rundem oder kreisförmigem Querschnitt versehenen Stängelteilers angeordnet sind.

Der Stängelteiler läuft vorzugsweise in an sich bekannter Weise nach vorn spitz zu, um sich zwischen den Pflanzen hindurch bewegen zu können. Falls er mit kreisförmigem Querschnitt versehen ist, weist er daher eine konische Form auf. Soll sich der Stängelteiler nicht um seine Längsachse drehen, kann seine Unterseite auch abgeflacht werden, so dass er näher am Erdboden angebracht werden kann.

Es ist denkbar, dass beim Erntevorgang abgeschnittene oder durch einen benachbarten Stängelteiler umgebogene Pflanzen auf einen Stängelteiler zu liegen kommen. Ist der Stängelteiler nach vorn spitz zulaufend, können diese Pflanzen entlang der abfallenden Oberfläche des Stängelteilers auf den Boden rutschen, von dem sie vom Erntegerät nicht oder nur unter Schwierigkeiten aufgenommen werden können. Um dieses Problem zu lösen, bietet es sich an, den Stängelteiler mit mehreren abgestuften Abschnitten zu versehen, wobei die Stufen nach hinten gerichtete Kanten oder Ratschen bilden. Sie verhindern, dass die Stängel der Pflanzen an der Oberfläche des Stängelteilers nach unten abrutschen. Die Stufen können relativ groß sein und sich um den ganzen Stängelteiler erstrecken. Es wäre aber auch denkbar, relativ kleine Stufen zu verwenden, die wie Schuppen auf der Haut eines Fisches über die Oberfläche des Stängelteilers verteilt sind. Diese Stufen können im Übrigen auch an starr oder nur in vertikaler oder in Vorwärtsrichtung beweglich am Erntegerät angebrachten Stängelteilern eingesetzt werden.

Die erfindungsgemäßen Stängelteiler finden vorzugsweise an Pflückern Verwendung, es wäre aber auch denkbar, sie an Maisgebissen einzusetzen. Bei Pflückern werden diese Stängelteiler in der Regel an den seitlichen Enden der Arbeitsbreite einer Pflückeinrichtung angebracht. Besonders vorteilhaft ist die Verwendung der erfindungsgemäßen Stängelteiler an Pflückern der eingangs beschriebenen Art, da sie eine Ausnutzung bzw. Vergrößerung der gesamten Arbeitsbreite der mit einem rotierenden Förderelement ausgestatteten Pflückeinrichtung ermöglichen.

In den Zeichnungen sind drei nachfolgend näher beschriebene Ausführungsbeispiele der Erfindung dargestellt. Es zeigen:
- Fig. 1: eine perspektivische Teilansicht eines erfindungsgemäßen Erntegeräts mit Stängelteilern in der Erntebetriebsstellung,
- Fig. 2: eine perspektivische Frontansicht des Stängelteilers des Erntegeräts aus Figur 1 beim Erntebetrieb,
- Fig. 3: eine perspektivische Teilansicht eines Erntegeräts mit einer anderen Ausführungsform eines Stängelteilers, der sich in der Erntebetriebsstellung befindet,
- Fig. 4: eine perspektivische Teilansicht eines Erntegeräts mit einer wiederum anderen Ausführungsform eines Stängelteilers, der sich in der Erntebetriebsstellung befindet, und
- Fig. 5: einen vertikalen Längsschnitt durch die Halterung des Stängelteilers der Figur 4.

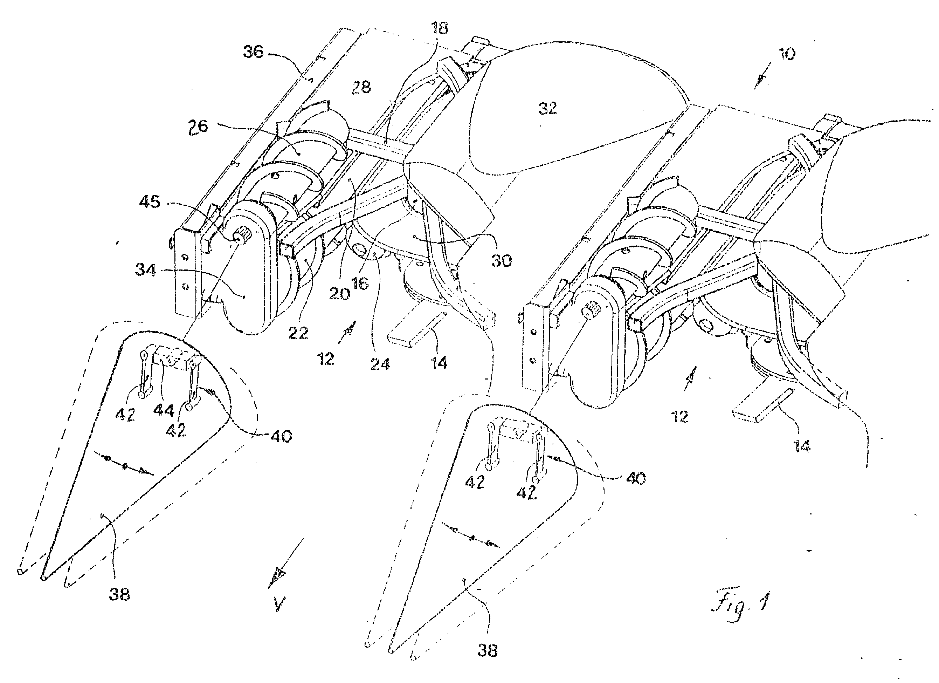

In Figur 1 ist ein Ausschnitt aus einem Erntegerät 10 perspektivisch dargestellt. Das Erntegerät 10 umfasst eine Anzahl an jeweils gleichartigen, seitlich nebeneinander angeordneten Einzugseinrichtungen 12 in Form von Pflückeinrichtungen, die durch einen an ihrer Rückseite angeordneten, nicht zeichnerisch dargestellten Träger untereinander verbunden sind. Beim Erntebetrieb wird der Träger am Schrägförderer eines Mähdrescher oder Einzugskanal eines Feldhäckslers angehängt und das Erntegerät 10 über ein Feld bewegt. Die auf dem Feld stehenden Pflanzen werden durch die Einzugseinrichtungen 12 aufgenommen, die Kolben werden abgetrennt und dem Erntefahrzeug zugeführt, während die Pflanzenstängel durch Schlägel 14 gehäckselt werden und auf dem Feld liegen bleiben. Im folgenden beziehen sich Richtungsangaben, wie vorn, hinten, unten und oben auf die Vorwärtsrichtung V des Erntegeräts 10.

Die Einzugseinrichtungen 12 umfassen jeweils ein um die Hochachse in Drehung versetzbares Förderelement 16 mit etwa radial nach außen abstehenden Mitnehmern 18, deren Endbereiche jeweils entgegen der Drehrichtung nachlaufend gekrümmt sind. Seitlich neben der Drehachse des Förderelements 16 befindet sich ein Pflückspalt 20, unterhalb dem zwei zusammenwirkende Pflückwalzen 22, 24 angeordnet sind. Die Pflückwalzen 22 und/oder 24 sind zumindest über einen Teil ihrer Länge mit wendelförmigen Mitnehmern versehen, um die Pflanzenstängel in den Pflückspalt 20 einzuführen und nach hinten durch den Pflückspalt 20 zu transportieren. Es wäre aber auch denkbar, die Pflanzen unabhängig von den Förderelementen 16 durch den Pflückspalt zu transportieren, z.B. durch Ketten oder nur durch die Pflückwalzen 22, 24. Oberhalb des Pflückspalts 20 und oberhalb der Mitnehmer 18 ist auf der dem Förderelement 16 gegenüberliegenden Seite des Pflückspalts 20 ein weiterer Schneckenförderer 26 angebracht, der schneller als die darunter angeordnete Pflückwalze 22 fördert und das Einführen der Pflanzenstängel in den Pflückspalt 20 erleichtert. Die beweglichen Elemente werden durch geeignete Antriebe in Drehung versetzt, wobei der weitere Schneckenförderer 26 über die Pflückwalze 22 und ein Getriebe angetrieben wird, das an der Vorderseite der Pflückwalze 22 und des weiteren Schneckenförderers 26 innerhalb eines Getriebegehäuses 34 angeordnet ist. Ein Rahmen 36 haltert die einzelnen Elemente der Einzugseinrichtung 12. Er ist seitlich verschiebbar am oben erwähnten Träger befestigt.

Beim Erntebetrieb werden die Pflanzen durch die Pflückwalzen 22, 24 in den Pflückspalt 20 eingezogen und im Zusammenwirken mit den Mitnehmern 18 entlang des Pflückspalts gezogen, wobei die Fruchtstände (Kolben o. dgl.) von den Pflanzen abgetrennt werden und auf Abdeckungen 28 und 30 beidseits des Pflückspalts 20 zu liegen kommen. Von dort werden sie durch die Mitnehmer 18 nach hinten abgefördert und durch eine nicht eingezeichnete Querförderschnecke in den Schrägförderer oder Einzugskanal des Erntefahrzeugs verbracht. Eine Abdeckung 32 oberhalb der Drehachse des Förderelements 16 dient der Sicherheit. Der Aufbau und die Funktion der Einzugseinrichtungen 12 sind detaillierter in der DE 101 53 198 A offenbart, deren Offenbarung durch Verweis mit in die vorliegende Anmeldung aufgenommen wird.

In Vorwärtsrichtung V vor den Einzugseinrichtungen 12 sind an den beiden seitlichen Enden des Arbeitsbereichs der einzelnen Einzugseinrichtungen 12 Stängelteiler 38 angeordnet, die dazu dienen, außerhalb des Erfassungsbereich der Mitnehmer 18 stehende Pflanzenstängel seitlich abzulenken, so dass sie dennoch von den Mitnehmern 18 erfasst werden können. Die Stängelteiler 38 sind konisch geformt mit nach vorn gerichteter Spitze. Ihr Querschnitt ist somit kreisförmig. Dadurch vermeidet man scharfe seitliche Kanten, an denen die Pflanzen nach unten umknicken können, was unerwünschte Ernteverluste nach sich zieht.

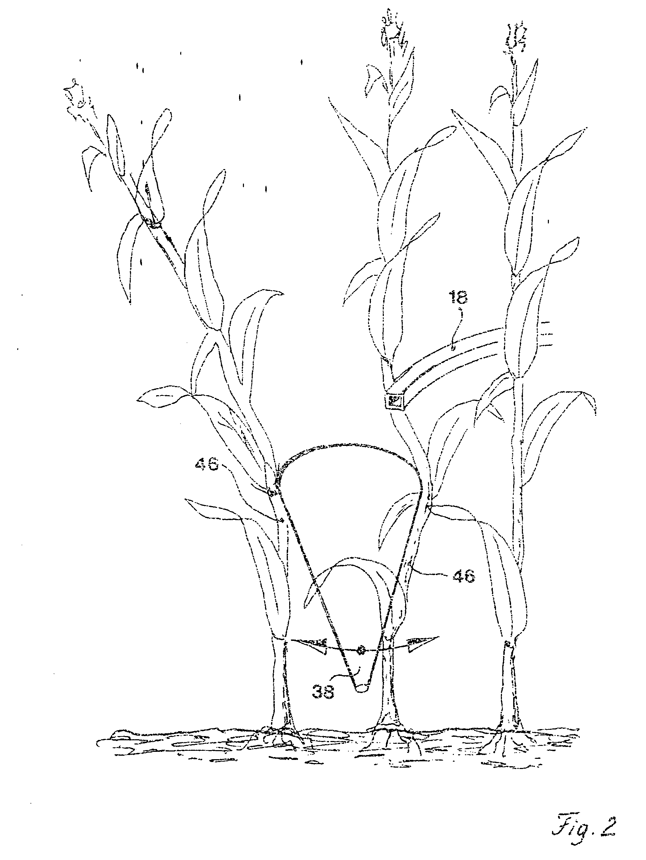

Die Stängelteiler 38 sind durch jeweils eine Parallelogrammführung 40 in seitlicher Richtung beweglich an den Getriebegehäusen 34 angebracht. Der am weitesten rechts angebrachte Stängelteiler des Erntegeräts 10 aus Figur 1 (nicht eingezeichnet) ist hingegen am Rahmen 36 der ihm benachbarten Einzugseinrichtung 12 befestigt. Die Parallelogrammführung 40 umfasst zwei sich parallel zueinander erstreckende Arme 42, die an ihren oberen Enden an einem Halter 44, der an einer Aufhängung 45 am Getriebegehäuse 34 befestigt ist, und an ihren unteren Enden an einer inneren Trägerstruktur (nicht eingezeichnet) des Stängelteilers 38 angelenkt sind, jeweils um sich in Vorwärtsrichtung erstreckende Achsen. Dadurch erreicht man, dass die Stängelteiler 38 durch die Schwerkraft in ihre Ruheposition vorgespannt und in seitlicher Richtung beweglich sind, wie durch die gestrichelten Umrisse in Figur 1 angedeutet. Stößt der Stängelteiler 38 somit gegen einen Pflanzenstängel 46, wie in Figur 2 dargestellt, kann er in seitlicher Richtung ausweichen. Ein übermäßiges, zu Kolbenverlusten führendes Umbiegen der Pflanzenstängel 46 ist nicht zu befürchten, da sich der Stängelteiler 38 zwischen den Pflanzenstängeln 46 hindurchschlängelt. Es kann sinnvoll sein, den seitlichen Bewegungsbereich der Stängelteiler 38 durch geeignete Anschläge an seiner Rückseite zu begrenzen, damit ein Einführen der Pflanzen in den Pflückspalt 20 auch bei seitlich ausgelenktem Stängelteiler 38 gewährleistet ist.

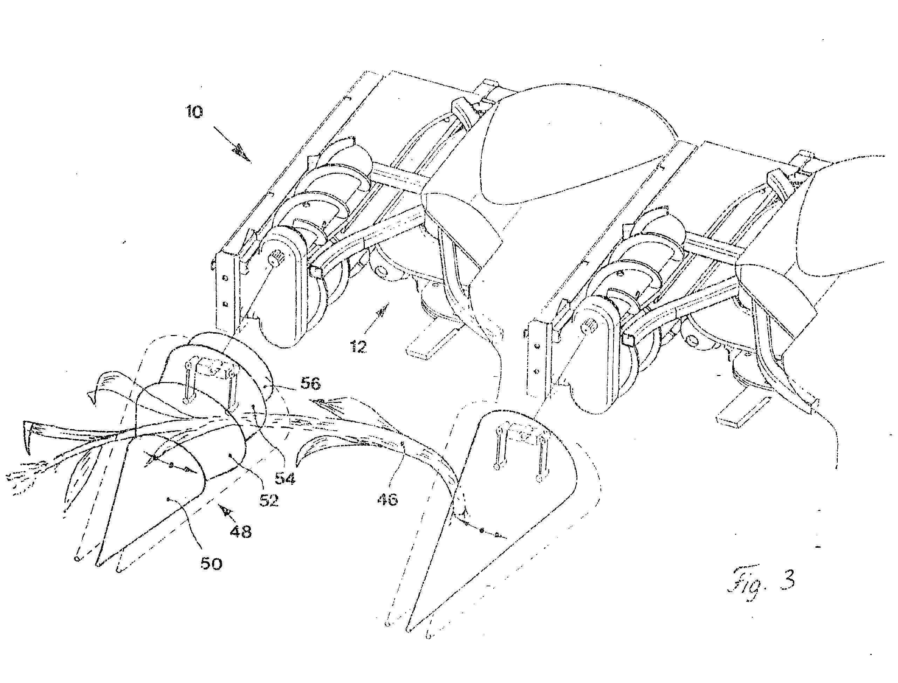

In der Figur 3 ist eine zweite Ausführungsform eines erfindungsgemäßen Erntegeräts 10 zeichnerisch dargestellt. Die Einzugseinrichtungen 12 sind mit den in Figur 1 dargestellten identisch, wie auch die Parallelogrammführungen 40, an denen die Stängelteiler 48 in seitlicher Richtung beweglich aufgehängt sind. Der Stängelteiler 48 unterscheidet sich von dem Stängelteiler 38 aus Figur 1 nur im Aufbau seiner Oberfläche. Der Stängelteiler 48 ist nämlich aus einzelnen kegelstumpfförmigen Abschnitten 50-56 zusammengesetzt, die in ihren Übergangsbereichen Stufen mit nach hinten weisenden Kanten bilden. In der Seitenansicht ist die Oberfläche des Stängelteilers 48 somit sägezahnförmig. Dadurch erreicht man, dass ein Pflanzenstängel 48, der von einem benachbarten Stängelteiler nach unten gedrückt wird und auf dem Stängelteiler 48 aufliegt, nicht nach unten auf den Erdboden rutscht und dem Ernteprozess verloren geht, da er an einer rückwärtigen Kante zwischen den Abschnitten 50-56 anliegt und am Weitergleiten gehindert wird. Durch nachfolgende Pflanzen wird er in den Pflückspalt 20 gedrückt. Auf diese Weise werden die Ernteverluste vermindert. In der Regel sind (anders als zeichnerisch dargestellt) alle Stängelteiler des Erntegeräts wie der dargestellte Stängelteiler 48 ausgeführt.

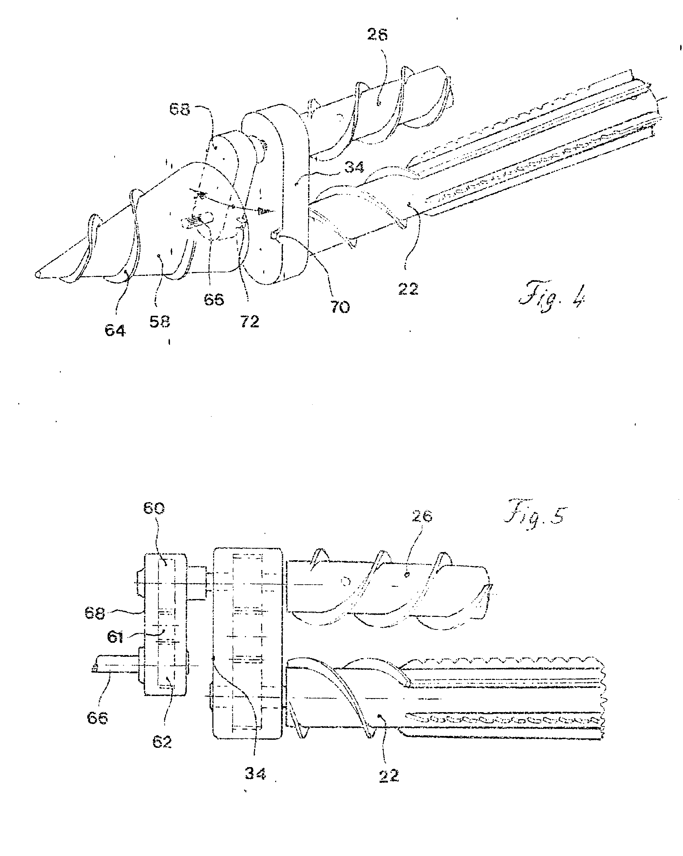

Schließlich ist in der Figur 4 eine Teilansicht einer dritten Ausführungsform eines erfindungsgemäßen Erntegeräts 10 dargestellt. Die Einzugseinrichtungen 12 entsprechen den in Figur 1 dargestellten und sind deshalb nicht mit eingezeichnet. Die Stängelteiler 58 sind im Unterschied zu den vorher beschriebenen Ausführungsformen um ihre Längsachse in Drehung versetzbar. Dazu wird die Drehbewegung des weiteren Schneckenförderers 26 von einem ersten Zahnrad 60 über ein zweites Zahnrad 61 auf ein drittes Zahnrad 62 übertragen, wie anhand der Schnittzeichnung durch die Halterung 68 des Stängelteilers 58, die in Figur 5 dargestellt ist, erkennbar ist. Das erste Zahnrad 60 ist an der Vorderseite des Getriebegehäuses 34 drehbar gelagert und steht mit dem darin angeordneten Getriebe in Antriebsverbindung, während die darunter angeordneten zweiten und dritten Zahnräder 61, 62 an der Halterung 68 gelagert sind, die ihrerseits um die Drehachse des ersten Zahnrads 60, die sich in der Vorwärtsrichtung V erstreckt, schwenkbar mit dem Getriebegehäuse 34 verbunden ist. Das dritte Zahnrad ist koaxial zum konischen, mit wendelförmigen Mitnehmern 64 versehenen Stängelteiler 58 angeordnet und versetzt ihn über eine Welle 66 in Drehung. Da die Halterung 68 um eine in Vorwärtsrichtung V verlaufende Achse pendelnd aufgehängt ist, können auch das dritte Zahnrad 62 und der Stängelteiler 58 eine Pendelbewegung in seitlicher Richtung ausführen, wie durch die gestrichelten Linien angedeutet wird. Durch die Schwerkraft wird der Stängelteiler 58 in seine Ruhestellung vorgespannt. Es kann auch in dieser Ausführungsform sinnvoll sein, den Bewegungsbereich des Stängelteilers 58 durch geeignete Anschläge 70, 72 an der Rückseite der Halterung 68 und der Vorderseite des Getriebegehäuses 34 zu begrenzen. Alternativ oder zusätzlich könnte man den Stängelteiler 58 durch Federn und/oder zusätzliche Gewichte in seine Ruhestellung vorspannen, auch um zu verhindern, dass er der Belastung durch eine Pflanze, die er eigentlich anheben soll, seitlich ausweicht. Der seitlich bewegliche, in Drehung versetzbare Stängelteiler 58 ermöglicht es, liegende Pflanzenstängel (Lagermais) vom Erdboden aufzuheben und in die Einzugseinrichtungen 12 einzuführen. Für den am weitesten rechts angeordneten Stängelteiler 58 wäre ein separater Antrieb, z. B. ein Hydromotor, vorzusehen, da ihm kein Getriebegehäuse 34 nachgeordnet ist.

Es sind Ausführungsformen denkbar, bei denen die Stängelteiler 38, 48, 58 beim Transport des Erntegeräts 10 in den zeichnerisch dargestellten Positionen verbleiben. Bei anderen Ausführungformen können einige der Stängelteiler 38, 48, 58 oder alle Stängelteiler 38, 48, 58 in eine Transportposition verbracht werden, in der sie beispielsweise vom Erntegerät abgenommen und separat verstaut oder nach oben oder unten oder zu einer Seite verschwenkt bzw. verschoben werden.

## Patentansprüche

1. Erntegerät (10) zur Ernte stängelartiger Pflanzen, mit mindestens einer Einzugseinrichtung (12) zur Aufnahme von auf einem Feld vorhandenen Pflanzen und wenigstens einem in einer Vorwärtsrichtung vor der Einzugseinrichtung (12) angeordneten Stängelteiler (38, 48, 58), der in seiner Erntebetriebsstellung gegenüber dem Erntegerät (10) in der seitlichen, sich quer zur Vorwärtsrichtung (V) erstreckenden Richtung beweglich gelagert ist, **dadurch gekennzeichnet, dass** der Stängelteiler (38, 48, 58) pendelnd mit dem Erntegerät (10) verbunden ist.

2. Erntegerät (10) nach Anspruch 1, **dadurch gekennzeichnet, dass** der Stängelteiler (38, 48, 58) durch eine Parallelogrammführung (40) mit dem Erntegerät (10) verbunden ist.

3. Erntegerät (10) nach einem der vorhergehenden Ansprüche, **dadurch gekennzeichnet, dass** der Stängelteiler (38, 48, 58) frei beweglich mit dem Erntegerät (10) verbunden oder in eine Ruheposition vorgespannt ist, z.B. durch die Schwerkraft und/oder eine Feder.

4. Erntegerät (10) nach einem der vorhergehenden Ansprüche, **dadurch gekennzeichnet, dass** der Stängelteiler (58) insbesondere durch einen aktiven Antrieb um seine sich in der Vorwärtsrichtung (V) erstreckende Längsachse in Drehung versetzbar ist.

5. Erntegerät (10) nach einem der vorhergehenden Ansprüche, **dadurch gekennzeichnet, dass** der Stängelteiler (38, 48, 58) mit von seiner Oberfläche abstehenden Förderelementen, insbesondere wendelförmigen Mitnehmern (64), versehen ist.

6. Erntegerät (10) nach Anspruch 4 oder 5, **dadurch gekennzeichnet, dass** der Antrieb des Stängelteilers (58) mit dem Antrieb der Einzugseinrichtung (12) verbunden ist.

7. Erntegerät (10) nach einem der vorhergehenden Ansprüche, **dadurch gekennzeichnet, dass** der Stängelteiler (38, 48, 58) einen runden, insbesondere kreisförmigen Querschnitt aufweist.

8. Erntegerät (10) nach einem der vorhergehenden Ansprüche, **dadurch gekennzeichnet, dass** der Stängelteiler (38, 48, 58) zumindest näherungsweise konisch geformt ist.

9. Erntegerät (10) nach einem der vorhergehenden Ansprüche, **dadurch gekennzeichnet, dass** sich der Stängelteiler (48) aus mehreren in Vorwärtsrichtung hintereinander angeordneten, abgestuften Abschnitten (50-56) zusammensetzt.

10. Erntegerät (10) nach Anspruch 9, **dadurch gekennzeichnet, dass** der in Vorwärtsrichtung (V) vordere Bereich eines hinteren Abschnitts (52-56) des Stängelteilers eine kleinere radiale Abmessung hat als der hintere Bereich des in Vorwärtsrichtung davor angeordneten Abschnitts (50-54).

11. Erntegerät (10) nach einem der vorhergehenden Ansprüche, **dadurch gekennzeichnet, dass** die Einzugseinrichtung (12) eine Pflückeinrichtung ist.

12. Erntegerät (10) nach Anspruch 11, **dadurch gekennzeichnet, dass** die Pflückeinrichtung ein um die Hochachse rotativ angetriebenes Förderelement (16) mit nach außen abstehenden Mitnehmern (18) zum Erfassen der Pflanzen umfasst, das eingerichtet ist, die Pflanzenstängel (46) in einen Pflückspalt (20) hinein und vorzugsweise auch entlang des Pflückspalts zu bewegen.

## Claims

1. Harvesting implement (10) for harvesting stalk-like plants, with at least one intake arrangement (12) for taking up plants located on a field and at least one stalk divider (38, 48, 58), which is arranged ahead of the intake arrangement (12) in a forward direction and disposed in its harvesting operation position to be movable relative to the harvesting implement (10) in the lateral direction extending transversely to the forward direction (V), **characterised in that** the stalk divider (38, 48, 58) is connected to the harvesting implement (10) to allow swinging movement.

2. Harvesting implement (10) according to Claim 1, **characterised in that** the stalk divider (38, 48, 58) is connected to the harvesting implement (10) through a parallelogram guidance linkage (40).

3. Harvesting implement (10) according to one of the preceding claims, **characterised in that** the stalk divider (38, 48, 58) is connected to the harvesting implement (10) to be freely movable or is prestressed into a resting position, e.g. as a result of gravity and/or a spring.

4. Harvesting implement (10) according to one of the preceding claims, **characterised in that** the stalk divider (58) can be set in rotation around its longitudinal axis extending in the forward direction (V) in particular through an active drive.

5. Harvesting implement (10) according to one of the preceding claims, **characterised in that** the stalk divider (3 8, 48, 5 8) is provided with conveying elements, in particular helically shaped drivers (64), projecting from its surface.

6. Harvesting implement (10) according to Claim 4 or 5, **characterised in that** the drive of the stalk divider (58) is connected to the drive of the intake arrangement (12).

7. Harvesting implement (10) according to one of the preceding claims, **characterised in that** the stalk divider (38, 48, 58) has a round, in particular circular, cross-section.

8. Harvesting implement (10) according to one of the preceding claims, **characterised in that** the stalk divider (38, 48, 58) is at least approximately conical in shape.

9. Harvesting implement (10) according to one of the preceding claims, **characterised in that** the stalk divider (48) is composed of several stepped sections (50-56) arranged one behind the other in forward direction.

10. Harvesting implement (10) according to Claim 9, **characterised in that** the front region in forward direction (V) of a rear section (52-56) of the stalk divider has a smaller radial dimension than the rear region of the section (50-54) arranged in front of it in forward direction.

11. Harvesting implement (10) according to one of the preceding claims, **characterised in that** the intake arrangement (12) is a picking arrangement.

12. Harvesting implement (10) according to Claim 11, **characterised in that** the picking arrangement comprises a conveying element (16), which is driven to rotate around the vertical axis and has fingers (18) projecting outwards for grasping the plants and which is arranged to move the stalk divider (46) into a plucking gap (20) and preferably also along the plucking gap.

## Revendications

1. Machine de récolte (10) pour végétaux à tige, comportant au moins un dispositif de cueillage (12), destiné à recevoir les végétaux disponibles sur le champ, et au moins un bec d'écartement (38, 48, 58), qui est disposé devant le dispositif d'alimentation dans la direction d'avancement et qui, dans sa position de service, est monté mobile par rapport à la machine de récolte (10) dans la direction latérale, orientée transversalement à la direction d'avancement (V), **caractérisée en ce que** le bec d'écartement (38, 48, 58) est assemblé de manière oscillante à la machine de récolte (10).

2. Machine de récolte (10) selon la revendication 1, **caractérisée en ce que** le bec d'écartement (38, 48, 58) est assemblé à la machine de récolte (10) par un guidage en parallélogramme (40).

3. Machine de récolte (10) selon l'une quelconque des revendications précédentes, **caractérisée en ce que** le bec d'écartement (38, 48, 58) est assemblé de manière librement mobile à la machine de récolte (10) ou est précontraint dans une position de repos, par exemple par la force de gravité et/ou par un ressort.

4. Machine de récolte (10) selon l'une quelconque des revendications précédentes, **caractérisée en ce que** le bec d'écartement (58) peut être entraîné en rotation autour de son axe longitudinal orienté dans la direction d'avancement (V), en particulier par l'intermédiaire d'un système d'entraînement actif.

5. Machine de récolte (10) selon l'une quelconque des revendications précédentes, **caractérisée en ce que** le bec d'écartement (38, 48, 58) est muni d'éléments de convoyage en saillie sur sa surface, en particulier des entraîneurs (64) hélicoïdaux.

6. Machine de récolte (10) selon la revendication 4 ou 5, **caractérisée en ce que** le système d'entraînement du bec d'écartement (58) est relié au système d'entraînement du dispositif d'alimentation (12).

7. Machine de récolte (10) selon l'une quelconque des revendications précédentes, **caractérisée en ce que** le bec d'écartement (38, 48, 58) a une section ronde, en particulier circulaire.

8. Machine de récolte (10) selon l'une quelconque des revendications précédentes, **caractérisée en ce que** le bec d'écartement (38, 48, 58) est réalisé avec une forme au moins sensiblement conique.

9. Machine de récolte (10) selon l'une quelconque des revendications précédentes, **caractérisée en ce que** le bec d'écartement (48) est formé par plusieurs parties (50-56) étagées, agencées les unes derrière les autres dans la direction d'avancement.

10. Machine de récolte (10) selon la revendication 9, **caractérisée en ce que** la zone antérieure, dans la direction d'avancement (V), d'une partie arrière (52-56) du bec d'écartement a une dimension radiale inférieure à celle de la zone postérieure de la partie (50-54) agencée en amont de celle-ci dans la direction d'avancement (V).

11. Machine de récolte (10) selon l'une quelconque des revendications précédentes, **caractérisée en ce que** le dispositif d'alimentation (12) est un dispositif de cueillage.

12. Machine de récolte (10) selon la revendication 11, **caractérisée en ce que** le dispositif de cueillage comporte un élément de convoyage (16), entraîné en rotation autour de l'axe vertical et muni d'entraîneurs (18) en saillie vers l'extérieur, destinés à saisir les végétaux, lequel est conçu pour déplacer les tiges de végétaux (46) dans une fente de cueillage (20) et de préférence aussi le long de la fente de cueillage.
